# DEMANDE DE BREVET EUROPEEN

(11) **EP 2 355 221 A2**
(43) Date de publication de la demande: **10.08.2011**
(21) Numéro de dépôt: 11152399.9
(22) Date de dépôt: 27.01.2011
(51) Int. Cl.: H01M 8/04, H01M 8/24, H01M 8/10

(54) **Dispositif comprenant une pile à combustible du type à hydrogène-air ou méthanol-air**

(30) Priorité: 29.01.2010 FR 1050626
(71) Demandeur: STMicroelectronics (Tours) SAS, 37100 Tours (FR); COMMISSARIAT A L'ENERGIE ATOMIQUE ET AUX ENERGIES ALTERNATIVES, 75015 Paris (FR)
(72) Inventeur: Cantin, Frédéric, 37000, TOURS (FR); Faucheux, Vincent, 38250, LANS EN VERCORS (FR)
(74) Mandataire: de Beaumont, Michel

(57) **Abrégé**

L'invention concerne un dispositif (20) comprenant une chambre (22) dans laquelle est disposée une pile (2) à combustible du type à hydrogène-air ou méthanol-air, la chambre comportant :
une paroi supérieure (30) dans laquelle est ménagée une ouverture,
une paroi inférieure (28) sur laquelle est disposée la pile de sorte que la surface d'exposition à l'air de la pile soit en regard de la paroi supérieure, et
un ventilateur (32) disposé dans l'ouverture.

## Description

### Domaine de l'invention

La présente invention concerne le domaine des piles à combustible du type à hydrogène-air ou méthanol-air. Elle concerne plus particulièrement un dispositif comprenant de telles piles et adapté à être utilisé dans des environnements variables.

### Exposé de l'art antérieur

Les piles à combustible à hydrogène-air sont constituées d'une ou plusieurs plaquettes de silicium dont chacune constitue une cellule de pile.

Une cellule connue est formée sur une plaque support, par exemple une tranche de silicium. Sur ce support est disposé par des techniques du type de celles utilisées en microélectronique un empilement actif interposé entre une électrode inférieure (constituant l'anode) et une électrode supérieure (constituant la cathode).

Pour faire fonctionner la pile, on injecte de l'hydrogène du côté de la face inférieure. La face supérieure est exposée à de l'air, porteur d'oxygène. Les molécules d'hydrogène sont décomposées en protons H⁺ et en électrons. Les électrons sont collectés au niveau de l'anode alors que les protons se recombinent avec l'oxygène de l'air ambiant pour former des microgouttelettes d'eau.

Une pile à combustible est susceptible d'être montée dans des équipements électroniques portables, tels que des chargeurs de batteries très faible puissance du type lithiumion. L'environnement de la pile est alors variable et difficilement contrôlable.

On a constaté qu'en l'absence d'aération, les gouttelettes d'eau produites du côté de la face supérieure de cathode de la pile sont susceptibles de former une pellicule d'eau, qui empêche l'arrivée d'oxygène : la pile "se noie".

Par contre, si une pile est disposée dans un environnement instable, des courants d'air à la surface de la pile sont susceptibles de la "sécher". La pile ne se trouve plus dans un environnement suffisamment saturé en humidité. Le rendement de la pile diminue et, lors de sa remise en route après des périodes de non-utilisation, la pile est incapable de fournir immédiatement la tension et le courant nominaux que l'on en attend.

### Résumé

Un objet d'un mode de réalisation de la présente invention est de prévoir une pile à combustible évitant au moins certains des inconvénients des piles à combustible antérieures.

Un objet plus particulier d'un mode de réalisation de la présente invention est de prévoir un dispositif comprenant une pile à combustible dont le rendement est optimisé.

Ainsi, un mode de réalisation de la présente invention prévoit un dispositif comprenant une chambre dans laquelle est disposée une pile à combustible du type à hydrogène-air ou méthanol-air, la chambre comportant :
une paroi supérieure dans laquelle est ménagée une ouverture,
une paroi inférieure sur laquelle est disposée la pile de sorte que la surface d'exposition à l'air de la pile soit en regard de la paroi supérieure, et
un ventilateur disposé dans l'ouverture.

Selon un autre mode de réalisation de l'invention, le ventilateur est en position centrée par rapport à la pile.

Selon un autre mode de réalisation de l'invention, le ventilateur a une dimension latérale comprise entre 5 et 25 mm, de préférence entre 10 et 20 mm.

Selon un autre mode de réalisation de l'invention, le ventilateur a une surface comprise entre 25 et 425 mm², de préférence entre 100 et 400 mm².

Selon un autre mode de réalisation de l'invention, le ventilateur est alimenté par la pile.

Selon un autre mode de réalisation de l'invention, la face interne de la paroi supérieure comprend une feuille en matière absorbante d'humidité communiquant par une ouverture auxiliaire avec le milieu extérieur à la chambre.

Un autre mode de réalisation de la présente invention prévoit un chargeur de batterie pour téléphone portable, comprenant un dispositif tel que décrit ci-dessus.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue schématique en coupe d'un dispositif comprenant une pile à combustible ;
la figure 2 est une vue schématique en perspective d'un dispositif comprenant une pile à combustible, selon un mode de réalisation de la présente invention ; et
les figures 3 et 4 sont des vues en coupe transversale selon le plan III-III de la figure 2 illustrant le fonctionnement du dispositif.

### Description détaillée

Par souci de clarté, de mêmes éléments ont été désignés par de mêmes références aux différentes figures qui n'ont pas été tracées à l'échelle.

Pour que la pile ne "sèche" pas, on pourrait prévoir de disposer la pile dans une chambre munie d'ouvertures. Ainsi, la pile peut être déplacée tout en étant moins sensible à des instabilités environnementales, telles que des courants d'air.

Pour obtenir cet environnement stable à proximité de la pile, on pourrait réaliser peu d'ouvertures dans la paroi supérieure de la chambre. Toutefois, la diffusion d'oxygène dans la chambre risquerait d'être limitée et donc insuffisante pour le bon fonctionnement de la pile. Par ailleurs, l'atmosphère dans la chambre risquerait d'être rapidement trop chargée en eau.

On pourrait alors décider d'augmenter le nombre et/ou la taille des ouvertures. On favoriserait cependant l'instabilité. En effet, des courants d'air seraient générés à la surface supérieure de la pile et la pile tendrait à "sécher".

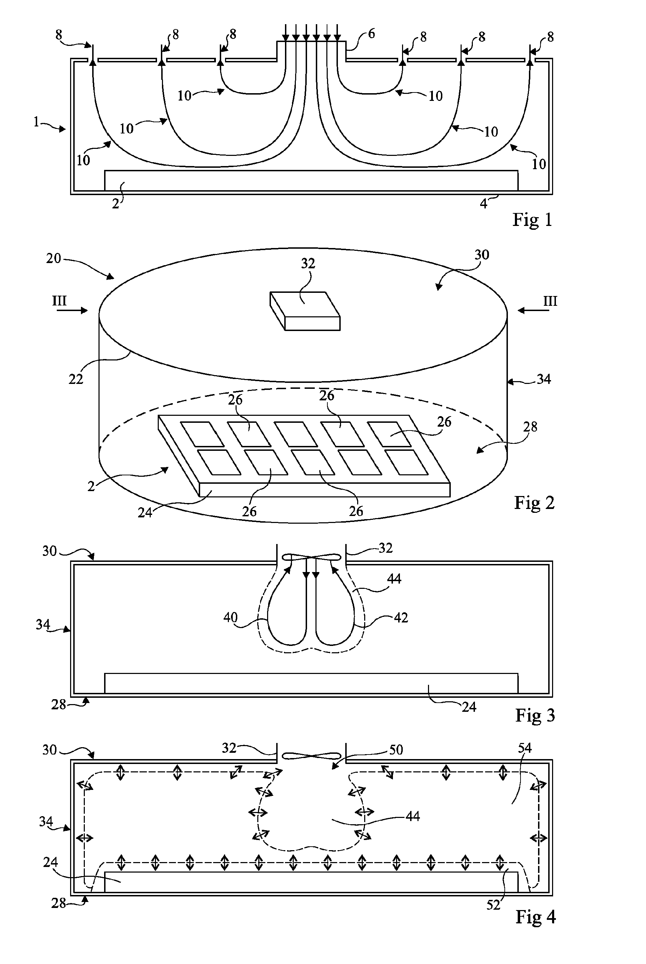

Pour pallier les inconvénients présentés ci-dessus, on pourrait prévoir de mettre en oeuvre un dispositif 1 tel que représenté en figure 1.

Le dispositif 1 comprend une pile à combustible 2 disposée dans une chambre 4. La chambre comprend une paroi supérieure dans laquelle est encastré un ventilateur 6. En outre, une pluralité d'ouvertures 8 sont ménagées dans cette surface. Le ventilateur 6 a pour fonction de faire pénétrer dans la chambre des flux d'air 10. Ces flux d'air passent à proximité de la surface supérieure de la pile 2 et se chargent de vapeur d'eau. Les flux sortent ensuite de la chambre 4 par les ouvertures 8. On note une faible amélioration du rendement de la pile.

Pour améliorer encore le rendement d'une pile à combustible, les Demandeurs proposent le dispositif décrit ci-après.

La figure 2 est une vue très schématique en perspective d'un dispositif 20 comprenant une chambre 22 dans laquelle est disposée une pile à combustible à hydrogène-air 2.

La pile 2 comprend un support 24. Le support comporte une pluralité de plaquettes de silicium 26 en contact avec l'air ambiant constituant le réservoir d'oxygène dans la chambre 22. La paroi inférieure de la pile est en contact avec une source d'hydrogène d'une façon non représentée.

La chambre 22 comporte une paroi inférieure 28 sur laquelle est disposée la pile 2. La chambre 22 comporte également une paroi supérieure 30 opposée à la paroi inférieure dans laquelle est ménagée une ouverture. Un ventilateur à pales 32 est disposé au niveau de l'ouverture. L'ouverture est formée dans cette paroi de sorte que le ventilateur soit sensiblement en face de la pile 2. Avantageusement, le ventilateur est en position centrée par rapport à la pile 2. Les parois inférieure 28 et supérieure 30 sont reliées par une paroi latérale 34.

Le ventilateur 32 a une dimension latérale comprise entre 5 et 25 mm, de préférence entre 10 et 20 mm. Le ventilateur a une surface comprise entre 25 et 425 mm², de préférence entre 100 et 400 mm². En outre, le ventilateur a une hauteur comprise entre 2 et 10 mm, de préférence entre 4 et 6 mm.

Les figures 3 et 4 sont des coupes transversales selon le plan III-III de la figure 2.

Le fonctionnement du dispositif 20 est le suivant. Comme l'illustre la figure 3, l'air extérieur à la chambre 22 pénètre dans la chambre par une partie centrale du ventilateur 32. L'air entrant est dit frais puisqu'il est chargé d'oxygène. On a représenté symboliquement deux boucles 40 et 42. Les boucles 40 et 42 pénétrant dans la chambre sensiblement par le centre du ventilateur se dirigent vers le bas, à savoir vers le support 24. Les flux d'air 40 et 42 remontent en direction de la paroi supérieure 30 sans affleurer la surface supérieure de la pile 2. Les flux d'air 40 et 42 sortent de la chambre 22 par une partie périphérique du ventilateur 32. L'ensemble des flux d'air est sensiblement confiné dans un puits 44 symbolisé par des pointillés. Le puits est disposé sous le ventilateur 32. On constate également que le puits 44 ne s'étend pas jusqu'à la surface supérieure de la pile 2. La circulation de l'air est uniquement localisée dans le puits 44, à l'écart de la pile.

En fonctionnement, la pile 2 rayonne de la chaleur. A l'équilibre, comme l'illustre la figure 4, le fonctionnement de la pile permet de distinguer approximativement trois zones thermiques distinctes 50, 52 et 54. La première zone 50, dite froide, est constituée du puits 44 disposé sensiblement au centre de la chambre 22. Ce puits 44 est essentiellement constitué d'air frais peu chargé en eau entrant par la partie centrale du ventilateur 32. La zone 50 comprend également des portions à proximité de la paroi latérale 34 et de la paroi supérieure 30. La profondeur de ces portions dépend notamment de la composition et de l'épaisseur de la paroi latérale et de la paroi supérieure.

La zone 52 dite chaude est disposée à proximité des plaquettes 26 le long de la surface supérieure du support 24 de la pile 2. En fonctionnement, l'air présent dans la zone 52 a donc une température supérieure à la température de l'air de la zone 50.

La zone 54 intermédiaire est définie entre les zones 50 et 52. La température de la zone 54 varie entre la température de la zone 50 et celle de la zone 52.

La zone 54 contient un air stagnant (peu brassé), en raison du confinement de la chambre 22 et en dépit de l'activité du ventilateur 32. Par ailleurs cet air est, du fait de son contact avec la zone 52 et de l'activité de la pile, chaud, humide et appauvri en oxygène.

Dans la zone 44 au contraire, l'air perpétuellement brassé est frais, à la température et aux teneurs en humidité et oxygène sensiblement égales à celle de l'air extérieur.

Les différences de concentrations donnent lieu à une diffusion gazeuse, à travers la surface d'intersection entre les zones 44 et 52. Cette diffusion gazeuse assure entre autres un approvisionnement en oxygène de la pile et évacuation partielle de vapeur d'eau via le ventilateur 32.

L'approvisionnement en oxygène est d'autant meilleur que la surface d'intersection est grande, ce qui dépend directement de la forme des boucles 42 que l'on a réussi à former avec le ventilateur 32. La forme présentée en figure 3, avec des boucles reliant centre et périphérie du ventilateur, étant la plus favorable trouvée expérimentalement. Si le ventilateur est éteint ou retiré, ces boucles disparaissent et la surface d'intersection entre 44 et 54 devient celle de l'ouverture du ventilateur, quatre fois plus petite dans l'exemple considéré.

La température élevée dans la zone 54 permet de maintenir un fort taux d'humidité dans la chambre.

L'évacuation limitée de vapeur d'eau par le ventilateur 32 permet à un mécanisme stabilisateur de l'humidité de prendre place : une condensation sur la paroi supérieure 30 (partie la plus froide de la chambre 22). Le taux d'humidité dans la zone 54 va alors s'établir, indépendamment de l'activité du ventilateur 32, à une valeur élevée qui ne dépend que de la différence de température.

L'évacuation de l'eau condensée sur la paroi supérieure 30 peut être assurée par une feuille en matière absorbante d'humidité, tel qu'un buvard judicieusement placé sur la face interne de la paroi 30, et transportant (via une ouverture auxiliaire dans la paroi de taille inférieure à la taille de l'ouverture ménagée pour la mise en place du ventilateur 32, l'ouverture auxiliaire étant bouchée par le passage du buvard) par capillarité l'eau liquide vers une surface de séchage externe à la chambre 22.

Ces phénomènes de diffusion naturelle de l'air d'une zone chaude vers une zone froide, symbolisés par des doubles flèches en figure 4, participent à la formation d'un environnement d'air stable et suffisamment humide, notamment à proximité des plaquettes 26. Les phénomènes de diffusion permettent d'obtenir un air contenant une quantité d'eau suffisante pour maintenir un taux d'humidité optimal près des plaquettes. Le phénomène de diffusion thermique à proximité de la pile est prédominant par rapport au phénomène de circulation de l'air qui est négligeable.

Le ventilateur 32 a pour fonction de réguler l'entrée des flux d'air descendants chargés d'oxygène et la sortie des flux d'air montants chargés en eau. En conséquence, on a un taux d'humidité stable dans la chambre. En outre, le phénomène de courant d'air à proximité des plaquettes 26 est absent. L'arrivée d'oxygène et l'évacuation d'eau sont régulières. Par ailleurs, le système est autorégulé. En effet, il n'est pas nécessaire d'utiliser un module de contrôle du ventilateur.

Les Demandeurs ont noté que des ouvertures auxiliaires autres que l'ouverture ménagée pour la mise en place du ventilateur 32, peuvent être formées dans la paroi supérieure 30 de la chambre 22, à condition que la surface définie par l'ensemble de ces ouvertures soit très faible, par exemple inférieure à 40 % de la surface de l'ouverture formée au niveau du ventilateur, et de préférence inférieure à 30 % de cette surface. Dans cette configuration, une partie de l'air injecté dans la chambre 22 par le ventilateur 32 tend à en ressortir par ces ouvertures. Leurs surfaces étant très inférieures par rapport à la surface de l'ouverture formée au niveau du ventilateur, on ne crée pas d'instabilités susceptibles notamment de "sécher" les plaquettes 26.

La forme de la chambre 2 peut être optimisée de manière à faciliter la circulation de l'air dans le puits 44 de la zone 50 de la chambre sans générer d'instabilités.

Le ventilateur 32 peut être alimenté par des moyens extérieurs au dispositif 20 ou par la pile 2.

Ce dispositif autonome peut être utilisé dans un équipement électronique tel qu'un chargeur de batterie pour téléphone portable.

Des modes de réalisation particuliers de la présente invention ont été décrits. Diverses variantes et modifications apparaîtront à l'homme de l'art. En particulier, on peut prévoir d'utiliser un ventilateur qui permet l'entrée d'air chargé d'oxygène par sa périphérie et la sortie d'air chargé d'eau par sa partie centrale. En outre, l'invention peut être adaptée pour des piles à combustible du type à méthanol-air, le méthanol jouant le rôle de l'hydrogène.

## Revendications

1. Dispositif (20) comprenant une chambre (22) dans laquelle est disposée une pile (2) à combustible du type à hydrogène-air ou méthanol-air, la chambre comportant :
une paroi supérieure (30) dans laquelle est ménagée une unique ouverture,
une paroi inférieure (28) sur laquelle est disposée la pile de sorte que la surface d'exposition à l'air de la pile soit en regard de la paroi supérieure, et
un ventilateur (32) disposé dans l'ouverture.

2. Dispositif selon la revendication 1, dans lequel le ventilateur (32) est en position centrée par rapport à la pile (2).

3. Dispositif selon la revendication 1 ou 2, dans lequel le ventilateur (32) a une dimension latérale comprise entre 5 et 25 mm, de préférence entre 10 et 20 mm.

4. Dispositif selon l'une quelconque des revendications 1 à 3, dans lequel le ventilateur (32) a une surface comprise entre 25 et 425 mm², de préférence entre 100 et 400 mm²_{.}

5. Dispositif selon l'une quelconque des revendications 1 à 5, dans lequel le ventilateur (32) est alimenté par la pile (2).

6. Dispositif selon l'une quelconque des revendications 2 à 5, dans lequel la face interne de la paroi supérieure (30) comprend une feuille en matière absorbante d'humidité communiquant par une ouverture auxiliaire avec le milieu extérieur à la chambre.

7. Chargeur de batterie pour téléphone portable, comprenant un dispositif (20) selon l'une quelconque des revendications 1 à 6.
